# EUROPEAN PATENT SPECIFICATION

(11) **EP 2 369 524 B1**
(45) Date of publication and mention of the grant of the patent: **09.07.2014**
(21) Application number: 09828587.7
(22) Date of filing: 22.10.2009
(51) Int. Cl.: G06K 7/00, G06K 19/07

(54) **RADIO FREQUENCY SIM CARD AND MAGNETIC INDUCTION CONTROL METHOD FOR RADIO FREQUENCY COMMUNICATION**
HF-SIM-KARTE UND MAGNETISCHES INDUKTIONSSTEUERUNGSVERFAHREN FÜR HF-KOMMUNIKATION
CARTE SIM À FRÉQUENCE RADIO ET PROCÉDÉ DE COMMANDE À INDUCTION MAGNÉTIQUE POUR COMMUNICATION À FRÉQUENCE RADIO

(30) Priority: 26.11.2008 CN 200810217967
(43) Date of publication of application: 28.09.2011
(73) Proprietor: Nationz Technologies Inc., Shenzhen, Guangdong 518057 (CN)
(72) Inventor: SUN, Yingtong, Shenzhen Guangdong 518057 (CN); ZHU, Shan, Shenzhen Guangdong 518057 (CN); LI, Meixiang, Shenzhen Guangdong 518057 (CN)
(74) Representative: Plougmann & Vingtoft A/S
(86) International application number: PCT/CN2009/074556
(87) International publication number: WO 2010/060326

(56) References cited:
- CN-A- 1 877 596
- CN-A- 101 014 968
- CN-A- 101 295 367
- GB-A- 2 310 067
- US-A1- 2005 093 374
- US-A1- 2008 076 475

## Description

### Technical Field

The present invention involves RF wireless communication technologies, particularly those involving RF SIM card, RF card reader and RF communication control methods.

### Background Technology

Subscriber Identity Model (SIM card) in existing mobile communication technologies are widely used in mobile communication terminals. Following development in sciences and technologies, various methods are employed to add various intelligent circuit modules into the SIM cards of common mobile communication terminals, making the SIM cards not only having basic SIM card functions, but also added other functions that are more pertinent to daily life. RF SIM card is one of these. The Applicants have filed a Chinese patent application regarding an RF SIM card, with an Application No. 200710124354.7. RF SIM cards adopt active RF technologies, allowing common SIM cards to have the functionalities of mobile payment such as electronic wallets, or access control and other consumer applications.

First, due to that the RF SIM card draws electricity from the battery of the mobile terminal, it will consume the power of the battery of the mobile terminal when in RF operations, and thus will affect the standby time of the mobile terminal. With respect to this issue, at present the method employed to reduce the RF SIM card power consumption is: the RF SIM card periodically queries on whether there are RF exchange data to determine whether there is a need to proceed to exchange processing. This method although can reduce the power consumption of the RF SIM card to a certain level, however when this method is adopted, the RF transceiver module and the microcontroller of the RF SIM card will still be activated due to interrogations when there are in fact no RF exchange data, consuming the power of the battery of the mobile terminal, and thus still significantly affects the standby time of the mobile terminal.

Second, said RF SIM cards in some applications (for example when using the RF SIM card as a public transit fare IC cards and other RF smart cards), to avoid the phenomena of unintentional reading and erroneous reading of the card, the communication range between the RF SIM card and the RF card reader must be controlled to within a very small range. Thus, the above described communication range control becomes the most important realization difficulty for RF SIM card wireless communication system. Existing technologies utilize the decay of the RF SIM card signal strength to control the wireless communication range between the RF SIM card and the RF card reader. However, RF SIM cards typically are assembled inside mobile communication terminals, and are affected by the shielding effect of the mobile communication terminals. For the same wireless transceiving power of the RF SIM cards being deployed, the RF signals would have different transceiving powers through different types of mobile communication terminals. Thus, it is necessary to build different RF SIM cards with different wireless transceiving powers for different types of mobile communication terminals to control their respective wireless communication ranges to within an appropriate range. This subsequently requires that, before using the RF SIM cards, the users must calibrate the wireless trasceiving power of the RF SIM cards according to the types of the mobile communication terminals. In addition, if a user replaces the mobile communication terminal, after each replacement it is necessary to calibrate the RF SIM card again with respect to the wireless trasceiving power. This tedious calibration process not only makes the user feel inconvenient, but also does not facilitate the wide applications of the RF SIM cards.

Patent specification GB 2 310 067 discloses a battery built-in wireless ID card unit and ID verification unit where a wireless unit, such as a card, includes a magnetic field detection section, which generates an electromotive force from a received magnetic field to turn on a power switch of a built in battery. The battery then powers a control section which transmits an ID code by radio. The control section then turns off the power switch

Patent specification US 2005/093374 discloses controlling power supplied to a circuit using an externally applied magnetic field where a power control circuit is used to control the power supplied to a circuit from a power source. The power control circuit is operable to connect and disconnect the power source from the circuit. The power control circuit connects the power source to the circuit in response to an externally applied magnetic field.

### Content of the Invention

The present invention aims at solving the technical problems of avoiding the above-mentioned drawbacks of the existing technologies, and provides a radio frequency (RF) subscriber identity module (SIM) card and a communication method as defined in the accompanying claims.

In this way, efficient reduction of power consumption is provided with little effect on the standby time of a mobile communication terminal.

In certain embodiments, an RF SIM card and a suitable RF card reader, and a magnetic induction control method for RF communication is provided, which can effectively reduce the power consumption and has little effect on the standby time of the mobile communication terminal.

Furthermore, designing and operating an RF SIM card, including the SIM card core, a first RF transceiver module, a first RF antenna and a first microcontroller, wherein said first RF transceiver module is in electrical connection with the first RF antenna and the first microcontroller respectively is provided. A magnetic induction module is also included, said magnetic induction module is electrically connected to the first RF transceiver module. When the magnetic induction module does not receive a matching magnetic field signal, the first RF transceiver module and the first microcontroller are both in a dormant state. When the magnetic induction module receives a magnetic field signal generated by the magnetic field generation module, the received magnetic field signal is converted to an electrical signal to activate the first RF transceiver module. The first RF transceiver module subsequently examines whether an RF modulation signal exists to determine whether to generate an external interruption to wake up the first microcontroller, and further enters a normal working state to exchange data with the RF card reader.

Additionally, designing, and using an RF card reader to work with the RF SIM card, including a second RF transceiver module, a second RF antenna, and a second microcontroller, wherein the second RF transceiver module is electrically connected to the second RF antenna and the second microcontroller respectively. A magnetic field generation module is also included, and is used for generating an induction magnetic field; wherein if the RF SIM card approaches the RF card reader, the RF SIM card senses the magnetic field signal generated by the magnetic field generation module, the first RF transceiver module of the RF SIM card is activated and the first microcontroller is waken up.

Furthermore, a magnetic induction control method for RF communication is proposed, based on the data communication between the RF SIM card and the suitable RF card reader, including the following steps:
A. disposing a magnetic field generation module in the RF card reader;
B. disposing a magnetic induction module in the RF SIM card, said magnetic induction module is electrically connected to the first transceiver module of the RF SIM card;
C. in a general state, that is, if the RF SIM card is not adjacent to the RF card reader, the first RF transceiver module and the first microcontroller of the RF SIM card are both in a dormant state;
D. when the RF SIM card approaches the RF card reader, the magnetic induction module of the RF SIM card senses the magnetic field signal from the magnetic field generation module of the RF card reader, and the sensed magnetic field signal is converted to an electrical signal to activate the first RF transceiver module;
E. The first RF transceiver module subsequently examines whether an RF modulation signal exists to determine whether to generate an external interruption to wake up the first microcontroller, and further enters a normal working state to exchange data with the second transceiver module of the RF card reader, and send the exchanged data to their respectively corresponding first and second microcontrollers.

The magnetic induction module is an induction coil, a Hall device, or a magnetic induction switch.

The first RF transceiver module of the SIM card, which is activated by the electrical signal converted from the magnetic induction, has a threshold value that is adjustable.

The first RF transceiver module of the RF SIM card and the second RF transceiver module of the RF card reader are configured to function in the super high frequency (SHF), very high frequency (VHF), or ultra high frequency (UHF) range.

Compared with existing technologies, the RF SIM card, the RF card Reader, and the magnetic Induction control methods in RF Communication of the present invention have technical effects in: 1. disposing a magnetic induction module in the RF SIM card, disposing suitable magnetic field generation module in the RF card reader, and making the first RF transceiver module and the first microcontroller of the RF SIM card in a dormant state as the general state when they do not sense the matching magnetic field signal, that is, if there are no RF exchange data; if the first RF transceiver module senses the appropriate magnetic field signal, that is, if the RF SIM card approaches the RF card reader to perform card swiping for RF data exchanging, the first RF transceiver module and the first microcontroller are then started normal working mode, this way the power consumption of the RF SIM card is effectively reduced, and thus there is little effect on the standby time of the mobile terminal; 2. The present invention uses magnetic induction technologies to effectively trigger the RF transceiver module to start working, due to that the transmission and induction of the magnetic field energy have little correlations with the design and structures of the mobile communication terminals, thereby ensuing that the RF SIM card senses consistent induction signal strength in different mobile communication terminals, thereby facilitating the effective wide applications of the RF SIM cards; 3. after the first transceiver module of the RF SIM card is activated, it examines whether an RF modulation signal exists and then decide to generate an external interruption to wake up the first microcontroller, further effectively reduces the power consumption of the RF SIM card, and, the activation threshold value of the first RF transceiver module of the RF SIM card is adjustable, thereby effectively controls the card reading range to within a specified range, and avoid erroneously and unintentionally reading the cards.

### Description of the Drawings

Figure 1 is the logic block diagram showing the principles of the RF SIM card of the present invention;
Figure 2 is the logic block diagram showing the principles of the RF card reader of the present invention;
Figure 3 is the logic flowchart illustrating the magnetic induction control method for the RF communication of the present invention.

### Specific Realization Methods

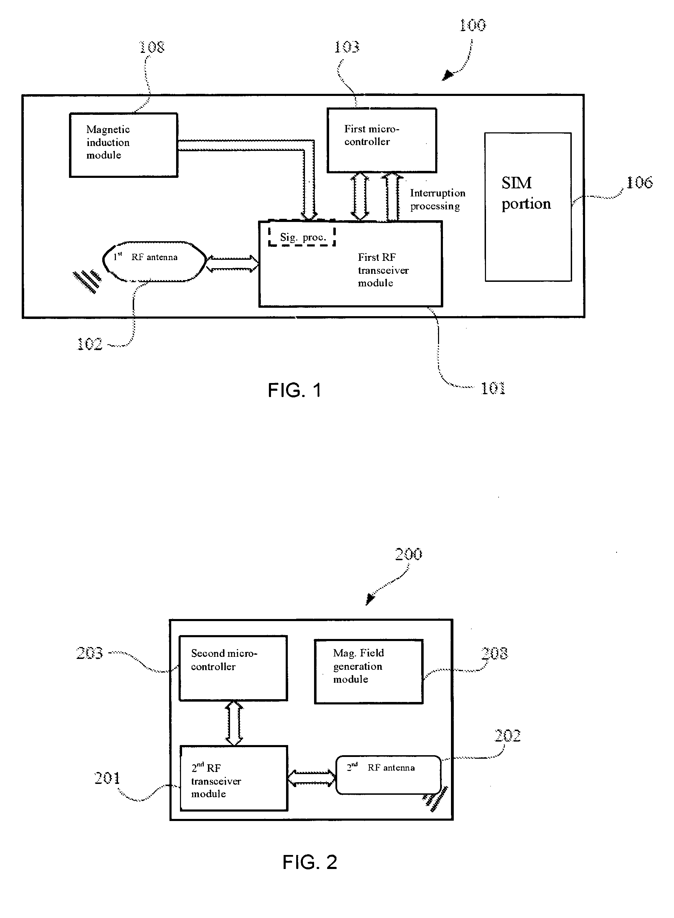

An RF SIM card 100, as illustrated in Figure 1, includes a SIM card core 106, a first RF transceiver module 101, a first RF antenna 102 and a first microcontroller 103, said first RF transceiver 101 is electrically connected respectively to the first RF antenna 102 and the first microcontroller 103, also includes a magnetic induction module 108, said magnetic induction module 108 is electrically connected to the first RF transceiver module 101.

The magnetic induction module 108 can adopt an induction coil, a Hall device, or a magnetic induction switch in conventional technologies.

An RF card reader 200, functioning together with the RF SIM card 100, as illustrated in Figure 2, includes a second RF transceiver module 202, a second RF antenna 202 and a second microcontroller 203, said second RF transceiver module 201 is electrically connected to the second RF antenna 202 and the second microcontroller 203 respectively, also includes a magnetic field generation module 208, used for generating induction magnetic field.

When said RF SIM card 100 approaches said RF card reader 200, said magnetic induction module 108 senses the appropriate magnetic field signal generated by the magnetic field generation module 208, the magnetic field signal is converted and processed into an electrical signal and then is sent to the first RF transceiver module 101, activating the first RF transceiver module 101, said first RF transceiver module 101 further examines whether an RF modulation signal exists determine whether to generate an external interruption to wake up the first microcontroller 103, and then enters a normal working state to exchange RF data with the RF card reader 200.

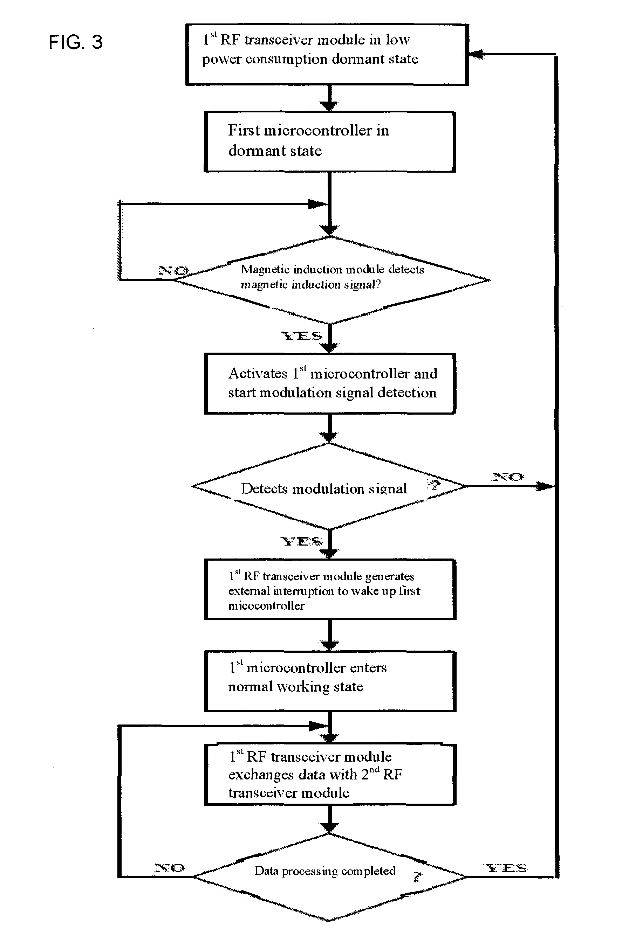

In the following with reference to Figure 3 it is described in a simplified form the RF communication process between the RF SIM card 100 as a smart RF card and the RF card reader 200, in other words the specific control processes of the magnetic induction control method of the RF communication of the present invention.
Step 1: in a general state, in other words when the RF SIM card 100 is not adjacent to the RF card reader 200, making the first RF transceiver module 101 of the RF SIM card and the first microcontroller 103 to be in a dormant state;
Step 2: when said RF SIM card 100 approaches the RF card reader 200, the RF SIM card 100 lies in the magnetic field generated by the magnetic field generation module 208 of the RF card reader 100, the magnetic induction module 108 of the RF SIM card 100 senses the magnetic field signal generated by the magnetic field generation module 208;
Step 3: said sensed magnetic field signal is converted and processed into an electrical signal to activate and start the first RF transceiver module 101, said first RF transceiver module 101 uses the first RF antenna 101 to perform RF modulation signal detection; if the RF modulation signal is detected, proceed to Step 4, if no RF modulation signal is detected, going back to Step 1;
Step 4: said first RF transceiver module 101 detects RF modulation signal, generates an external interruption to wake up the first microcontroller 103 to enter a normal working mode;
Step 5: between the first RF transceiver module 101 of the RF SIM card 100 and the second RF transceiver module 201 of the RF card reader 200 (through their respective first RF antenna 102 and second RF antenna 202), exchange and process RF exchange data;
Step 6: the first microcontroller 103 and the second microcontroller 203 finishes processing exchange data.

In the present invention, said first RF transceiver module 101 has an adjustable threshold value for activation by the electrical signal converted from the magnetic induction. Said first RF transceiver module 101 of the RF SIM card 100 and the second RF transceiver module 201 of the RF card reader 200 work in the frequency ranges of super high frequency (SHF), very high frequency (VHF) or ultra high frequency (UHF) ranges.

Said magnetic induction module 108 can adopt an induction coil, a Hall device, or a magnetic induction switch, and the magnetic field generation module 208, they all belong to conventional technologies, and their principles and specific control are not described here. Regarding the processing and conversion between the electrical signals and the magnetic signals, they can be performed inside the magnetic induction module 108, and can also be processed in the RF transceiver module 101 with appropriate circuits, these are also conventional technologies, and are not specifically described here.

## Claims

1. A radio frequency (RF) subscriber identity module (SIM) card (100) comprising:
a SIM portion (106);
a first transceiver module (101);
a first RF antenna (102);
a magnetic induction module (108); and
a first microcontroller (103),
**characterised in that** the configuration of the first transceiver module (101) and the first microcontroller (103) is such that
(A) both are in a dormant state if the magnetic induction module (108) does not receive a magnetic field signal and
(B) the first transceiver module (101), if the magnetic induction module (108) receives a magnetic field signal, is activated by an electrical signal converted from the magnetic field signal, whereupon the first transceiver module (101) generates an interrupt to wake up the first microcontroller (103) to enter a working state, in which the first transceiver module (101) exchanges data with an RF card reader (200).

2. The RF SIM card of Claim 1, wherein the magnetic induction module (108) comprises one of an induction coil, a Hall device, or a magnetic induction switch.

3. The RF SIM card of Claim 1, wherein the first transceiver module (101) has an adjustable activation threshold for activation by an electrical signal converted from a magnetic field signal..

4. The RF SIM card of Claim 3, wherein the activation threshold is adjusted based on a predetermined communication range between the RF SIM card (100) and the RF card reader (200).

5. The RF SIM card of Claim 1, wherein the RF SIM card (100) has a communication range determined by an activation threshold of the first transceiver module (101).

6. The RF SIM card of Claim 1, wherein the first transceiver module (101) comprises an RF transceiver module and is configured to function in a super high frequency (SHF), a very high frequency (VHF), or an ultra high frequency (UHF) range.

7. The RF SIM card of Claim 1, wherein the RF SIM card (100) is configured as a replaceable SIM card of a mobile communication terminal.

8. The RF SIM card of Claim 1, wherein the magnetic field signal is a signal received from the RF card reader (200).

9. A communication method comprising:
if a radio frequency (RF) subscriber identity module (SIM) card (100) and an RF card reader (200) are not within an effective communication range, having both a first transceiver module (101) and a first microcontroller (103) of the RF SIM card in a dormant state;
**characterised in that**
if the RF SIM card (100) and the RF card reader (200) are within the effective communication range, converting a magnetic field signal into an electrical signal to activate the first transceiver module (101), wherein the magnetic signal is generated by a magnetic field generation module (208) of the RF card reader (200) and received by a magnetic induction module (108) of the RF SIM card (100);
detecting an RF signal; and
generating an interrupt to wake up the first microcontroller (103) to enter a working state, in which the first transceiver module (101) exchanges data with a second transceiver module (201) in the RF card reader (200).

10. The method of Claim 9, further comprising:
if the RF signal is detected, sending the exchanged data to respective microcontrollers (103; 203) of the RF SIM card and the RF card reader for processing.

11. The method of Claim 9, further comprising adjusting an activation threshold of the first transceiver module (101) to thereby select an effective communication range between the RF SIM card (100) and the RF card reader (200).

12. The method of Claim 9, wherein the first and second transceiver modules (101; 201) are configured to function in the super high frequency (SHF), very high frequency (VHF), or ultra high frequency (UHF) range.

## Patentansprüche

1. Funkfrequenz-(HF)-Teilnehmeridentifizierungsmodul-(SIM)-Karte (100), umfassend:
einen SIM-Abschnitt (106);
ein erstes Sende-Empfangs-Modul (101);
eine erste HF-Antenne (102);
ein Magnetinduktionsmodul (108); und
einen ersten Mikrocontroller (103),
**dadurch gekennzeichnet, dass** die Konfiguration des ersten Sende-Empfangs-Moduls (101) und des ersten Mikrocontrollers (103) derart ist, dass
(A) sich beide in einem Ruhezustand befinden, wenn das Magnetinduktionsmodul (108) kein Magnetfeldsignal erhält und
(B) das erste Sende-Empfangs-Modul (101) bei Empfang eines Magnetfeldsignals durch das Magnetinduktionsmodul (108) mittels eines aus dem Magnetfeldsignal umgewandelten elektrischen Signals aktiviert wird, wonach das erste Sende-Empfangs-Modul (101) eine Unterbrechung zum Wecken des ersten Mikrocontrollers (103) zum Übergang in einen Betriebszustand generiert, in dem das erste Sende-Empfangs-Modul (101) Daten mit einem HF-Kartenleser (200) austauscht.

2. HF-SIM-Karte nach Anspruch 1, wobei das Magnetinduktionsmodul (108) eine Induktionsspule, ein Hall-Element oder einen Magnetinduktionsschalter umfasst.

3. HF-SIM-Karte nach Anspruch 1, wobei das erste Sende-Empfangs-Modul (101) eine einstellbare Aktivierungsschwelle für die Aktivierung mittels eines aus dem Magnetfeldsignal umgewandelten elektrischen Signals aufweist.

4. HF-SIM-Karte nach Anspruch 3, wobei die Aktivierungsschwelle auf der Grundlage eines vorbestimmten Kommunikationsbereichs zwischen der HF-SIM-Karte (100) und dem HF-Kartenleser (200) eingestellt wird.

5. HF-SIM-Karte nach Anspruch 1, wobei die HF-SIM-Karte (100) einen Kommunikationsbereich aufweist, der durch eine Aktivierungsschwelle des ersten Sende-Empfangs-Moduls (101) festgelegt wird.

6. HF-SIM-Karte nach Anspruch 1, wobei das erste Sende-Empfangs-Modul (101) ein HF-Sende-Empfangs-Modul umfasst und dazu konfiguriert ist, in einem Zentimeterwellen- (SHF), Meterwellen- (VHF) oder Dezimeterwellenbereich zu arbeiten.

7. HF-SIM-Karte nach Anspruch 1, wobei die HF-SIM-Karte (100) als eine austauschbare SIM-Karte eines mobilen Kommunikationsendgeräts konfiguriert ist.

8. HF-SIM-Karte nach Anspruch 1, wobei das Magnetfeldsignal ein von dem HF-Kartenleser (200) empfangenes Signal ist.

9. Kommunikationsverfahren, umfassend:
wenn eine Funkfrequenz-(HF)-Teilnehmeridentifizierungsmodul-(SIM)-Karte (100) und ein HF-Kartenleser (200) nicht in einem wirksamen Kommunikationsbereich sind, wobei sich ein erstes Sende-Empfangs-Modul (101) und ein erster Mikrocontroller (103) der HF-SIM-Karte in einem Ruhezustand befinden;
**dadurch gekennzeichnet, dass**
wenn sich die HF-SIM-Karte (100) und der HF-Kartenleser (200) in einem wirksamen Kommunikationsbereich befinden, ein Magnetfeldsignal in ein elektrisches Signal umgewandelt wird, um das erste Sende-Empfangs-Modul (101) zu aktivieren, wobei das Magnetsignal von einem Magnetfeldgenerierungsmodul (208) des HF-Kartenlesers (200) generiert und von einem Magnetinduktionsmodul (108) der HF-SIM-Karte (100) empfangen wird;
ein HF-Signal erfasst wird; und
eine Unterbrechung zum Wecken des ersten Mikrocontrollers (103) zum Übergang in einen Betriebszustand generiert wird, in dem das erste Sende-Empfangs-Modul (101) Daten mit einem zweiten Sende-Empfangs-Modul (201) in dem HF-Kartenleser (200) austauscht.

10. Verfahren nach Anspruch 9, weiterhin umfassend:
Senden der ausgetauschten Daten zu dem jeweiligen Mikrocontroller (103; 203) der HF-SIM-Karte und des HF-Kartenlesers zur Verarbeitung, wenn das HF-Signal erfasst wird.

11. Verfahren nach Anspruch 9, weiterhin umfassend das Einstellen einer Aktivierungsschwelle des ersten Sende-Empfangs-Moduls (101), um dadurch einen wirksamen Kommunikationsbereich zwischen der HF-SIM-Karte und dem HF-Kartenleser (200) zu wählen.

12. Verfahren nach Anspruch 9, wobei das erste und das zweite Sende-Empfangs-Modul (101; 201) dazu konfiguriert ist, in einem Zentimeterwellen-(SHF), Meterwellen- (VHF) oder Dezimeterwellenbereich zu arbeiten.

## Revendications

1. Carte à module d'identité d'abonné (SIM) à fréquence radio (RF) (100) comprenant :
une portion SIM (106) ;
un premier module émetteur-récepteur (101) ;
une première antenne RF (102) ;
un module d'induction magnétique (108) ; et
un premier microcontrôleur (103),
**caractérisée en ce que** la configuration du premier module émetteur-récepteur (101) et du premier microcontrôleur (103) est telle que
(A) ils sont tous deux dans un état inactif si le module d'induction magnétique (108) ne reçoit pas de signal de champ magnétique et
(B) si le module d'induction magnétique (108) reçoit un signal de champ magnétique, le premier module émetteur-récepteur (101) est activé par un signal électrique obtenu par conversion du signal de champ magnétique, après quoi le premier module émetteur-récepteur (101) génère une interruption pour activer le premier microcontrôleur (103) afin qu'il passe dans un état de fonctionnement, dans lequel le premier module émetteur-récepteur (101) échange des données avec un lecteur de carte RF (200).

2. La carte SIM RF de la revendication 1, dans laquelle le module d'induction magnétique (108) comprend l'un des éléments suivants : une bobine d'induction, un dispositif à effet Hall ou un commutateur d'induction magnétique.

3. La carte SIM RF de la revendication 1, dans laquelle le premier module émetteur-récepteur (101) possède un seuil d'activation ajustable pour l'activation par un signal électrique obtenu par conversion d'un signal de champ magnétique.

4. La carte SIM RF de la revendication 3, dans laquelle le seuil d'activation est ajusté sur la base d'un rayon de communication prédéterminé entre la carte SIM RF (100) et le lecteur de carte RF (200).

5. La carte SIM RF de la revendication 1, dans laquelle la carte SIM RF (100) possède un rayon de communication déterminé par un seuil d'activation du premier module émetteur-récepteur (101).

6. La carte SIM RF de la revendication 1, dans laquelle le premier module émetteur-récepteur (101) comprend un module émetteur-récepteur RF et est configuré pour fonctionner dans une gamme de supra-hautes fréquences (SHF), de très hautes fréquences (VHF) ou d'ultra-hautes fréquences (UHF).

7. La carte SIM RF de la revendication 1, dans laquelle la carte SIM RF (100) est configurée sous forme de carte SIM remplaçable d'un terminal de communication mobile.

8. La carte SIM RF de la revendication 1, dans laquelle le signal de champ magnétique est un signal provenant du lecteur de carte RF (200).

9. Procédé de communication comprenant :
si une carte à module d'identité d'abonné (SIM) à fréquence radio (RF) (100) et un lecteur de carte RF (200) ne se trouvent pas dans un rayon de communication efficace, dans lequel un premier module émetteur-récepteur (101) et un premier microcontrôleur (103) de la carte SIM RF se trouvent dans un etat inactif;
**caractérisé en ce que**
si la carte SIM RF (100) et le lecteur de carte RF (200) se trouvent dans le rayon de communication efficace, conversion d'un signal de champ magnétique en signal électrique pour activer le premier module émetteur-récepteur (101), dans lequel le signal magnétique est généré par un module générateur de champ magnétique (208) du lecteur de carte RF (200) et reçu par un module d'induction magnétique (108) de la carte SIM RF (100) ;
détection d'un signal RF ; et
production d'une interruption pour activer le premier microcontrôleur (103) afin qu'il passe dans un état de fonctionnement, dans lequel le premier module émetteur-récepteur (101) échange des données avec un deuxième module émetteur-récepteur (201) dans le lecteur de carte RF (200).

10. Le procédé de la revendication 9, comprenant également :
si le signal RF est détecté, envoi des données échangées aux microcontrôleurs (103 ; 203) respectifs de la carte SIM RF et du lecteur de carte RF pour traitement.

11. Le procédé de la revendication 9, comprenant également l'ajustement d'un seuil d'activation du premier module émetteur-récepteur (101) de manière à sélectionner un rayon de communication efficace entre la carte SIM RF (100) et le lecteur de carte RF (200).

12. Le procédé de la revendication 9, dans lequel le premier et le deuxième module émetteur-récepteur (101 ; 201) sont configurés pour fonctionner dans la gamme de supra-hautes fréquences (SHF), de très hautes fréquences (VHF) ou d'ultra-hautes fréquences (UHF).
